# EUROPÄISCHE PATENTSCHRIFT

(11) **EP 2 930 809 B1**
(45) Veröffentlichungstag und Bekanntmachung des Hinweises auf die Patenterteilung: **02.08.2017**
(21) Anmeldenummer: 15153395.7
(22) Anmeldetag: 02.02.2015
(51) Int. Cl.: H02G 3/12

(54) **Elektrisches/elektronisches Installationsgerät**
Electric/electronic installation device
Appareil d'installation électrique/électronique

(30) Priorität: 19.03.2014 DE 102014103713
(43) Veröffentlichungstag der Anmeldung: 14.10.2015
(73) Patentinhaber: Albrecht Jung GmbH & Co. KG, 58579 Schalksmühle (DE)
(72) Erfinder: Hartmann, Torsten, 58509 Lüdenscheid (DE); Wiesing, Dietmar, 58553 Halver (DE); Brosowski, Mathias, 42897 Remscheid (DE); Gebhardt, Marc, 58579 Schalksmühle (DE)

(56) Entgegenhaltungen:
- EP-A1- 2 498 356
- EP-A2- 2 200 138
- EP-B1- 2 059 985

## Beschreibung

Die vorliegende Erfindung geht von einem gemäß Oberbegriff des Hauptanspruches konzipierten elektrischen/elektronischen Installationsgerät aus.

Derartige Installationsgeräte sind typischerweise Geräte, die zur Dateneingabe und zur Datenausgabe vorgesehen sind und im Zusammenhang mit einem Installationssystem eines Gebäudes Verwendung finden. Auch als Schalter oder Schutzkontaktsteckdosen sind derartige Installationsgeräte ausgeführt. Der Einsatz eines solchen Installationsgerätes ist typischerweise so dimensioniert, dass dieser in eine handelsübliche Installationsdose eingesetzt werden kann. Der Aufsatz eines solchen Installationsgerätes bildet die sichtseitige Oberfläche und verfügt typischerweise über ein Eingabepanel, über welches dieses Installationsgerät bedient werden kann und/oder mehrere weitere Geräte angesteuert werden können. Darüber hinaus kann der Aufsatz auch eine Anzeigeeinheit aufweisen oder insgesamt als Dateneingabeeinheit und Datenausgabeeinheit ausgeführt sein, etwa als Touchscreen-Display. In vielen Fällen weist der Aufsatz zur einfachen Kennzeichnung unterschiedliche Schaltflächen und/oder Piktogramme auf, damit sich dem Benutzer die Bedienung dieses Installationsgerätes auf einfache Art und Weise erschließt. Oftmals sind solche elektrischen/elektronischen Installationsgeräte als Schalter, Taster, Dimmer ausgeführt. Auch als Türkommunikationsgeräte finden solche elektrischen/elektronischen Installationsgeräte oftmals Verwendung. Zur einfachen und schnellen Montage werden solche elektrischen/elektronischen Installationsgeräte häufig nur noch in Art einer Schnappverbindung an dem, an der Installationsdose befestigten Träger haltend festgelegt, so dass auch durch Unbefugte eine einfache und schnelle Demontage möglich ist. Dies ist jedoch nicht erwünscht, weshalb solche elektrischen/elektronischen Installationsgeräte häufig mit einer Abziehschutzeinrichtung (Schutz gegen eine unbefugte Demontage) versehen werden.

Durch die DE 10 2005 062 493 B3 ist ein dem Oberbegriff des Hauptanspruches entsprechendes elektrisches/elektronisches Installationsgerät bekannt geworden. Dieses elektrische/elektronische Installationsgerät weist einen, in einer Installationsdose unterzubringenden Einsatz auf, wobei der Einsatz rückseitig mit Verbindungselementen zum Anschluss an ein Installationssystem eines Gebäudes versehen ist, sowie haltend über eine Schnappfederanordnung mit einem an der Installationsdose festgelegten Träger zusammenwirkt. Frontseitig weist ein solches elektrisches/elektronisches Installationsgerät üblicherweise einen, mit dem Einsatz koppelbaren Aufsatz auf. Es ist eine Abziehschutzeinrichtung vorgesehen, damit Unbefugte nicht auf einfache Art und Weise eine Demontage des elektrischen/elektronischen Installationsgerätes vornehmen können. Diese Abziehschutzvorrichtung wird jedoch über Schrauben betrieben, was mit einem entsprechenden Umstand verbunden und oftmals auch nicht erwünscht oder möglich ist.

Zudem ist durch die EP 2 059 985 B1 ein elektrisches/elektronisches Installationsgerät bekannt geworden. Bei diesem elektrischen/elektronischen Installationsgerät wird an dessen, in einer Installationsdose unterzubringenden Einsatz frontseitig ein Träger befestigt. Dies erfolgt über zwei, an den Einsatz angeformte Schnappfederelemente, welche verrastend mit dem Träger zusammenwirken. Über Schrauben wird der Träger mit dem daran befindlichen Einsatz an der Installationsdose festgelegt.

Des Weiteren ist durch die EP 2 498 356 A1 eine diebstahlsichere Fixierung eines Frontmoduls an einem an einer Wand befestigten Trägermodul bekannt geworden. Die Diebstahlsicherungsvorrichtung ist dabei derart ausgebildet, dass mittels dieser das Frontmodul an dem als Trägermodul bezeichneten Einsatz fixierbar ist, wobei die Diebstahlsicherungsvorrichtung von dem Frontmodul und/oder dem Trägermodul ausschließlich mittels eines Spezialwerkzeuges lösbar ist. Der als Trägermodul bezeichnete Einsatz wird diebstahlsicher, wie üblich, durch eine Schraubverbindung oder eine Klemmvorrichtung an der Wand festgelegt.

Außerdem ist durch die EP 2 200 138 A2 eine Elektro-Installationsgerät mit einem in einer handelsüblichen Installationsdose montierbaren Basisgerät bekannt geworden, welches über einen Trägerrahmen mit einem Bedien- oder Funktionselement verrastbar ist. Dazu kommt das Bedien- oder Funktionselement mittels eines mit einem Rasthaken versehenen Federschenkel mit einer am Trägerrahmen vorhandenen Rastfläche in Wirkverbindung. Es ist ein Entnahmeschutz vorgesehen, welcher über Verbindungsmittel am Ort einer Trägerrahmenausnehmung am Trägerrahmen montierbar ist und welcher einen Rahmen und eine daran befestigte, in die Trägerrahmenausnehmung eintauchende Stützplatte aufweist. Eine Auslenkung des Federschenkels des Bedien- oder Funktionselements wird durch diese Stützplatte erschwert. Somit ist eine Verrastung mit geringer oder erhöhter Abzugskraft für das Lösen der Bedien- oder Funktionseinheit vom Trägerrahmen ermöglicht.

Ausgehend von derart ausgebildeten elektrischen/elektronischen Installationsgeräten liegt der vorliegenden Erfindung die Aufgabe zugrunde, eine Abziehschutzvorrichtung zu schaffen, welche ohne Verwendung von Schrauben auf einfache Art und Weise einen wirkungsvollen Schutz gegen eine unbefugte Demontage solcher elektrischen/elektronischen Installationsgeräte sicherstellt.

Erfindungsgemäß wird diese Aufgabe durch die im Hauptanspruch angegebenen Merkmale gelöst.

Bei einer solchen Ausbildung ist besonders vorteilhaft, dass trotz einer komfortablen Schnellmontage (in Art einer Schnappverbindung) der elektrischen/elektronischen Installationsgeräte vor Ort (in einer Installationsdose) eine wirkungsvolle Demontageverhinderung für Unbefugte realisiert ist. Die Wirkelemente der Abziehschutzvorrichtung (Sicherungsfedern) sind dabei im Endmontagezustand der elektrischen/elektronischen Installationsgeräte vorteilhafterweise verdeckt angeordnet. Zudem ist besonders vorteilhaft, dass die elektrischen/elektronischen Installationsgeräte nur schrittweise demontierbar sind, das heißt, solche elektrischen/elektronischen Installationsgeräte sind in einem ersten Schritt durch einfaches Abziehen nur zum Teil aus ihrer Installationsdose entnehmbar, dann wird nämlich nach diesem Teilmontagevorgang automatisch die Abziehschutzvorrichtung wirksam, womit eine vollständige Demontage wirkungsvoll verhindert ist. Zum Beispiel durch den Einsatz eines Lösewerkzeuges lässt sich dann das elektrische/elektronische Installationsgerät in einem zweiten Schritt vollständig demontieren, kann also vom Benutzer letztendlich aus der Installationsdose entfernt werden.

Weitere vorteilhafte Ausgestaltungen des erfindungsgemäßen Gegenstandes sind in den Unteransprüchen angegeben. Anhand zweier Ausführungsbeispiele sei die Erfindung im Prinzip näher erläutert. Dabei zeigen:
- Fig. 1:: prinziphaft eine Explosionsdarstellung einer, für eine Unterputzmontage vorgesehenen Installationsdose in Zuordnung eines Trägers, eines Designrahmens und eines elektrischen/elektronischen Installationsgerätes, gemäß erstem Ausführungsbeispiel;
- Fig. 2:: prinziphaft einen Vollschnitt eines gemäß Figur 1 ausgeführten elektrischen/elektronischen Installationsgerätes, in seiner Endmontagestellung;
- Fig. 3:: prinziphaft das Detail X gemäß Figur 2, in vergrößerter Darstellung;
- Fig. 4:: prinziphaft einen Vollschnitt eines gemäß Figur 1 ausgeführten elektrischen/elektronischen Installationsgerätes, in seiner Teildemontagestellung;

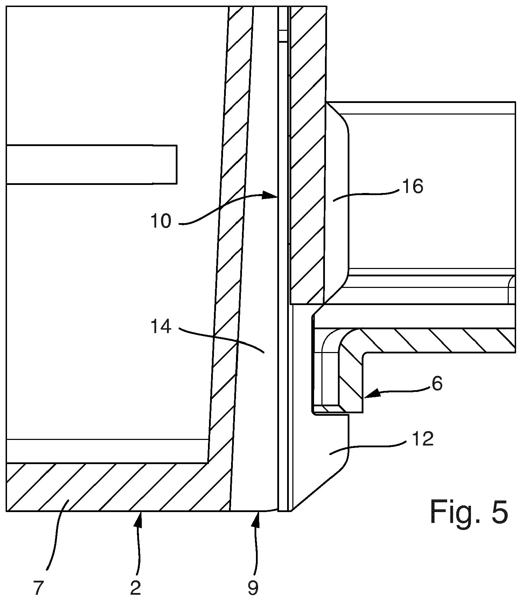

- Fig. 5:: prinziphaft das Detail Y gemäß Figur 4, in vergrößerter Darstellung.
- Fig. 6:: prinziphaft eine Sicherungsfeder gemäß einer ersten Ausführung als Einzelteil räumlich, in vergrößerter Darstellung;
- Fig. 7:: prinziphaft eine Sicherungsfeder gemäß einer zweiten Ausführung als Einzelteil räumlich, in vergrößerter Darstellung;
- Fig. 8:: prinziphaft eine Explosionsdarstellung einer, für eine Unterputzmontage vorgesehenen Installationsdose in Zuordnung eines Trägers, eines Designrahmens und eines elektrischen/elektronischen Installationsgerätes, gemäß zweitem Ausführungsbeispiel.

Wie aus den Figuren hervorgeht, ist ein solches elektrisches/elektronisches Installationsgerät mit einem, in einer Installationsdose 1 unterzubringenden Einsatz 2 versehen, wobei der Einsatz 2 rückseitig elektrische Verbindungselemente aufweist, die den Anschluss an ein Versorgungsnetz eines Gebäudes ermöglichen. Der Einsatz 2 ist frontseitig mit einem Aufsatz 4 versehen, der unter Zwischenschaltung eines Designrahmens 5 wandseitig zur Anlage kommt. An der Installationsdose 1 ist ein Träger 6 festgelegt, welcher haltend mit einer am Gehäuse 7 des Einsatzes 2 angebrachten Schnappfederanordnung 8 zusammenwirkt. Somit ist vor Ort auf einfache Art und Weise eine besonders schnelle Montage solcher elektrischer/elektronischer Installationsgeräte in Art einer Schnappverbindung möglich. Rückseitig sind im Gehäuse 7 des Einsatzes 2 zwei Schächte 9 zur Aufnahme jeweils einer Sicherungsfeder 10 vorhanden. Die beiden Sicherungsfedern 10 sind jeweils einerseits mit zwei ersten Haltemitteln 11 im zugehörigen Schacht 9 festlegbar und weisen andererseits jeweils zwei, über den Schacht 9 hinausragendes zweite Haltemittel 12 auf, welche zur Demontageverhinderung verrastend an dem, an der Installationsdose 1 festgelegten Träger 6 zur Anlage kommen.

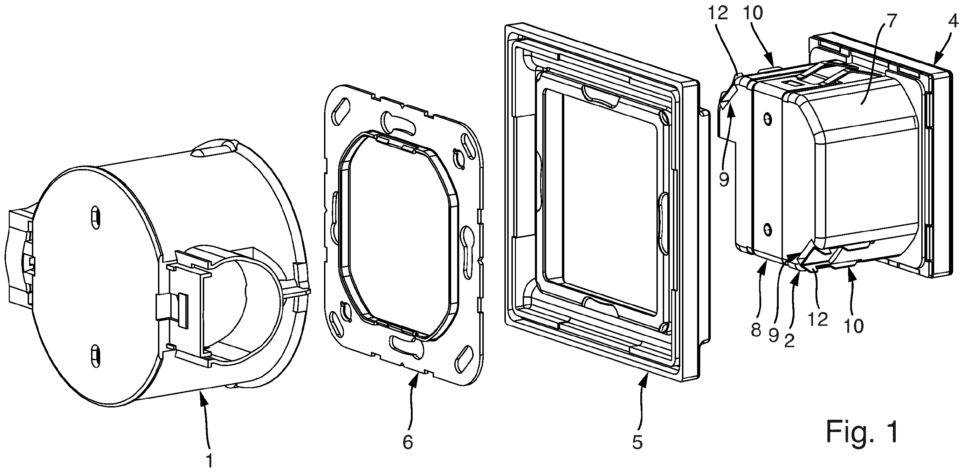

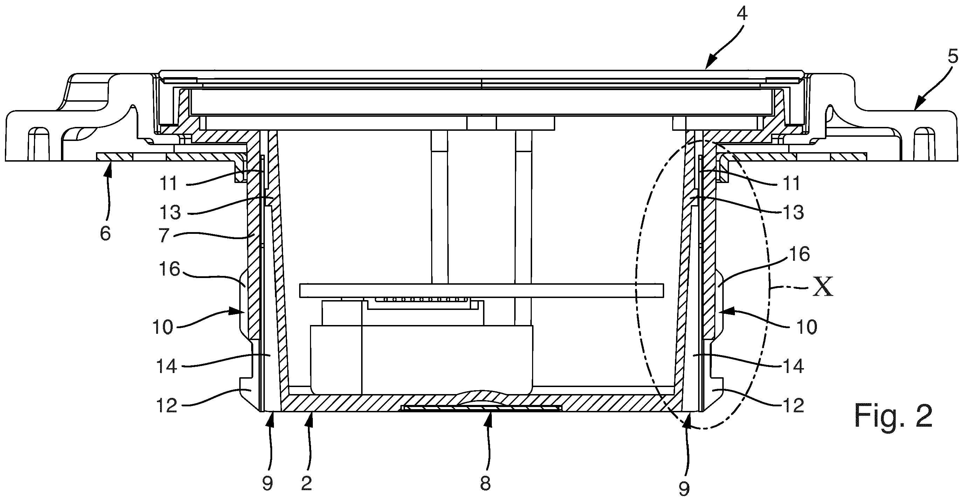

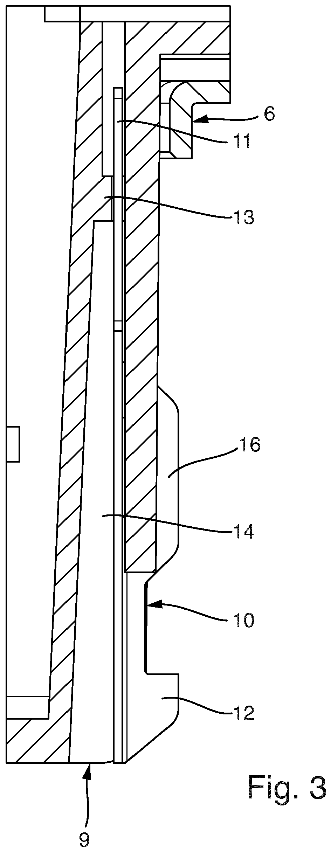

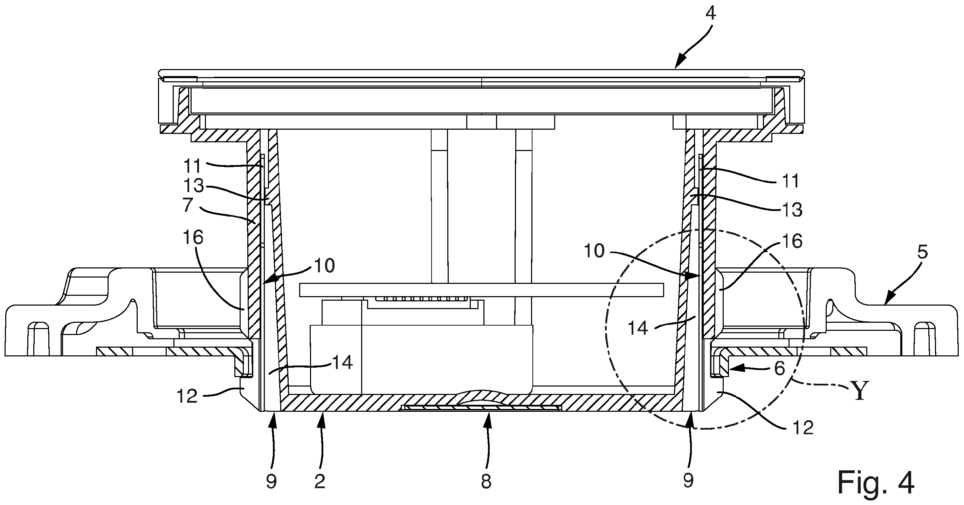

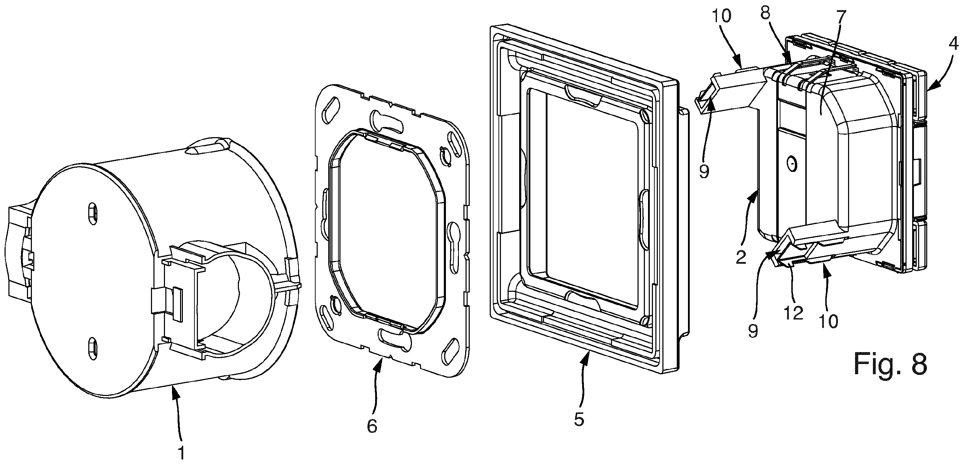

Wie des Weiteren aus den Figuren hervorgeht, weisen die beiden Schächte 9 im Bereich des zugeordneten ersten Haltemittels 11 jeweils einen Festsitz 13 und zum Zwecke der Verrastungslösung, ausgehend vom Festsitz 13 bis zum Endbereich des zweiten Haltemittels 12 jeweils eine, eine Ausweichbewegung ermöglichende Freimachung 14 auf. Wie insbesondere aus den Figuren 1 bis 4 hervorgeht, sind die beiden Schächte 9 gemäß erstem Ausführungsbeispiel in das Gehäuse 7 des Einsatzes 2 integriert. Die beiden Schächte 9 sind gegenüberliegend angeordnet, wobei die Schachtmündung dem Gehäuse 7 bodenseitig zugeordnet ist. Wie insbesondere aus Figur 8 hervorgeht, sind die beiden Schächte 9 ebenfalls seitlich und gegenüberliegend am Gehäuse 7 angeordnet, stehen jedoch mit jeweils einem Schachtansatz über den Boden des Gehäuses 7 hinaus. Die beiden freien Enden der Schachtansätze weisen jeweils eine Schachtmündung auf.

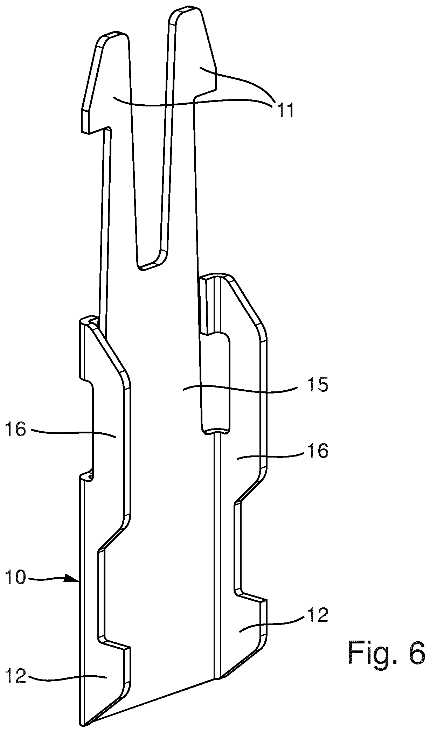

Jede Sicherungsfeder 10 gemäß erster Ausführung weist, wie insbesondere aus Figur 6 hervorgeht, einen Betätigungssteg 15 auf, an den einerseits die beide ersten Haltemittel 11 und an den andererseits die beiden zweiten Haltemitteln 12 angeformt sind. Der Betätigungssteg 15 ist beidseitig mit einer angeformten Lasche 16 versehen.

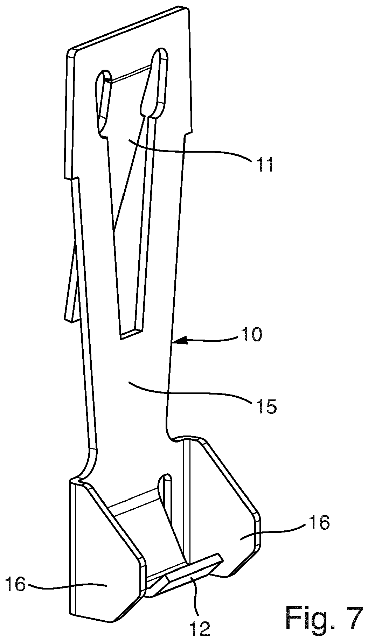

Jede Sicherungsfeder 10 gemäß zweiter Ausführung weist, wie insbesondere aus Figur 7 hervorgeht, einen Betätigungssteg 15 auf, an den sich einerseits ein Schenkelbereich mit einem zungenartig ausgestellten ersten Haltemittel 11 und an den sich andererseits ein Schenkelbereich mit einem angeformten zweiten Haltemittel 12 in Form eines Rasthakens anschließt. Das eine zweite Haltemittel 12 ist beidseitig von angeformten Laschen 16 eingefasst.

Insbesondere bei elektrischen/elektronischen Installationsgeräten, welche in öffentlichen Gebäuden verbaut sind, ist es von Vorteil, wenn diese gegen eine unbefugte Demontage geschützt sind, um unerwünschten Manipulationen und/oder Diebstahl wirkungsvoll vorbeugen zu können. Beim Stand der Technik werden zu diesem Zweck Schraubbefestigungen verwendet, die permanent oder optional zum Einsatz kommen. Bei der vorstehend näher beschriebenen Abziehschutzvorrichtung (Schutz gegen eine unbefugte Demontage) von elektrischen/elektronischen Installationsgeräten ist vorteilhafterweise eine schraubenlose Sicherungsmöglichkeit realisiert. Die Sicherung der elektrischen/elektronischen Installationsgeräte gegen einfaches Abziehen von der Wand bzw. aus ihrer Installationsdose 1 erfolgt, wie bereits beschrieben, über zwei seitlich am Gehäuse 7 des Einsatzteiles 2 vorhandene Schächte 9, welche bedarfsweise jeweils mit einer Sicherungsfeder 10 bestückt werden können. Bei der Montage solcher elektrischer/elektronischer Installationsgeräte federn die Sicherungsfedern 10 zurück, um eine schnelle und einfache Montage in einer zugehörigen Installationsdose 1 zu ermöglichen. Bei der Demontage greifen jedoch die beiden Sicherungsfedern 10 nach Beendigung des Teildemontagevorganges (ersten Schritt) hinter den Träger 6, welcher an der zugehörigen Installationsdose 1 festgelegt ist. Um das elektrische/elektronische Installationsgerät anschließend vollständig aus der Wandbefestigung beziehungsweise aus seiner Installationsdose 1 entnehmen zu können, müssen nach diesem Teilmontagevorgang die beiden Sicherungsfedern 10 gegebenenfalls mittels eines Werkzeuges entriegelt werden, so dass für Unbefugte eine vollkommene Demontage wirkungsvoll verhindert bzw. zumindest erschwert ist.

Zur Realisierung einer solchen Abziehschutzvorrichtung werden, wie bereits erwähnt, die beiden Sicherungsfedern 10 lediglich in den zugehörigen Schacht 9 des Einsatzes 2 eingeschoben, wobei diese letztendlich mit ihren beiden ersten Haltemitteln 11 innerhalb des Schachtes 9 verrasten und somit einen festen Sitz im Gehäuse 7 einnehmen. Wie bereits beschrieben, ist jeder der beiden Schächte 9 ausgehend von seinem Festsitz 13 nach innen freigestellt, womit ein Raum geschaffen ist, in welchem die Sicherungsfedern 10 während des Montagevorganges automatisch zurückweichen können. Bei der Montage des elektrischen/elektronischen Installationsgerätes gleiten nämlich die zweiten Haltemittel 12 und der Betätigungssteg 15 mit seinen Laschen 16 über Schrägen am Träger 6 ab, wobei die Sicherungsfeder 10 in Richtung Innenraum des Gehäuses 7 ausweichen. Bei der Demontage gleiten die Betätigungsstege 15 bzw. die Laschen 16 der beiden Sicherungsfedern 10 am Träger 6 ab und stellen dabei die beiden zugehörigen zweiten Haltemittel 12 in Richtung Innenraum des Gehäuses 7 zurück, so dass bei der Demontage kein Leitungsgut durch die zweiten Haltemittel 12 mitgerissen oder beschädigt werden kann. Kurz vor dem Beenden des Demontagevorganges (Teildemontagevorgang bzw. erster Schritt) rasten die beiden zweiten Haltemittel 12 der beiden Sicherungsfedern 10 hinter den Träger 6 ein, so dass jetzt eine vollständige Demontage des elektrischen/elektronischen Installationsgerätes wirkungsvoll verhindert ist. Nur durch den gleichzeitigen Druck auf die Betätigungsstege 15 der beiden Sicherungsfedern 10, zum Beispiel mittels eines entsprechenden Werkzeuges, federn diese in Richtung Innenraum des Gehäuses 7 zurück, wodurch sich dann das elektrische/elektronische Installationsgerät vollständig aus seiner Installationsdose 1 entnehmen lässt. Nach der vollständigen Demontage des elektrischen/elektronischen Installationsgerätes federn die beiden Sicherungsfedern 10 automatisch wieder in ihre Ausgangsstellung zurück.

Der Einfachheit halber wurde nur die Wirkungsweise der insbesondere näher in Figur 6 dargestellten ersten Ausführung der Sicherungsfeder 10 beschrieben. Es ist jedoch möglich, ohne den Gedanken der Erfindung zu verlassen, auch andere Sicherungsfedern 10 einzusetzen, wie sie zum Beispiel als zweite Ausführung näher in Figur 7 dargestellt ist. Bei dieser Sicherungsfeder 10 ist lediglich ein erstes Haltemittel 11 vorgesehen, welches innerhalb des zugehörigen Schachtes 9 eine Verrastung und damit eine sichere Halterung hervorruft. Zudem ist auch lediglich ein einziges zweites Haltemittel 12 vorgesehen, welches nach dem Teildemontagevorgang (erster Schritt) mit dem Träger 6 verrastend zusammenwirkt. Die beiden seitlich angeordneten Laschen 16 verhindern, dass bei der Demontage Leitungsgut mitgerissen wird. Eine Führung der beiden Laschen 16 ist durch zwei, in den Träger 6 eingeformte Schlitze gewährleistet, welche im Zusammenspiel mit den beiden Laschen 16 bei der Montage und Demontage auch das Ein- und Ausfedern der Sicherungsfeder 10 innerhalb des zugehörigen Schachtes 9 bewirken.

Es ist somit eine Abziehschutzvorrichtung für elektrische/elektronische Installationsgeräte geschaffen, welche ohne Verwendung von Schrauben auf einfache Art und Weise einen wirkungsvollen Schutz gegen eine unbefugte Demontage solcher elektrischen/elektronischen Installationsgeräte sicherstellt. Bei einer solchen Ausbildung ist besonders vorteilhaft, dass trotz einer komfortablen Schnellmontage (in Art einer Schnappverbindung) der elektrischen/elektronischen Installationsgeräte vor Ort (in einer Installationsdose) eine wirkungsvolle Demontageverhinderung für Unbefugte realisiert ist. Die Wirkelemente der Abziehschutzvorrichtung (Sicherungsfedern) sind dabei im Endmontagezustand der elektrischen/elektronischen Installationsgeräte vorteilhafterweise verdeckt angeordnet. Zudem ist besonders vorteilhaft, dass die elektrischen/elektronischen Installationsgeräte nur schrittweise demontierbar sind, das heißt, solche elektrischen/elektronischen Installationsgeräte sind in einem ersten Schritt durch einfaches Abziehen nur zum Teil aus ihrer Installationsdose entnehmbar, dann wird nämlich nach diesem Teilmontagevorgang automatisch die Abziehschutzvorrichtung wirksam, womit eine vollständige Demontage wirkungsvoll verhindert ist. Nur zum Beispiel durch den Einsatz eines Lösewerkzeuges lässt sich dann das elektrische/elektronische Installationsgerät in einem zweiten Schritt vollständig demontieren, kann also vom Benutzer letztendlich aus der Installationsdose 1 entfernt werden.

Vorstehend wurden zwei Varianten solcher elektrischer/elektronischer Installationsgeräte beschrieben, welche als Kompaktgeräte ausgeführt sind. Der Einsatz 2 und der Aufsatz 4 sind bei diesen Kompaktgeräten steht fest miteinander in Verbindung. Im Gegensatz zu der vorbeschriebenen Variante besteht auch die Möglichkeit, dass solche elektrischen/elektronischen Installationsgeräte aus zwei Funktionsmodulen bestehen, wobei das erste Funktionsmodul als in einer Installationsdose 1 unterzubringender Einsatz 2, und das zweite Funktionsmodul als frontseitig mit dem Einsatz 2 koppelbarer Aufsatz 4 ausgeführt ist. Bei einer solchen Ausführung kann der Aufsatz 4 bei Bedarf auf einfache Art und Weise ausgetauscht werden. Eine wiederlösbare Kopplung von Einsatz 2 und Aufsatz 4 kann zum Beispiel durch eine Steckverbinderanordnung realisiert sein. Um ein einfaches Abziehen des Aufsatzes vom Einsatz zu verhindern, kann zusätzlich auch für diese Kopplung eine Demontageschutzeinrichtung vorgesehen sein.

### Bezugszeichenliste

- 1: Installationsdose
- 2: Einsatz
- 4: Aufsatz
- 5: Designrahmen
- 6: Träger
- 7: Gehäuse
- 8: Schnappfederanordnung
- 9: Schacht
- 10: Sicherungsfeder
- 11: Erste Haltemittel
- 12: Zweite Haltemittel
- 13: Festsitz
- 14: Freimachung
- 15: Betätigungssteg
- 16: Lasche

## Patentansprüche

1. Elektrisches/elektronisches Installationsgerät mit einem in einer Installationsdose unterzubringenden Einsatz, wobei der Einsatz rückseitig Verbindungselemente zum Anschluss an ein Installationssystem eines Gebäudes aufweist sowie über zumindest eine rückseitig am Gehäuse des Einsatzes angebrachte Schnappfederanordnung haltend mit einem an der Installationsdose festgelegten Träger zusammenwirkt und wobei der Einsatz frontseitig mit einem Aufsatz versehen ist, **dadurch gekennzeichnet, dass** rückseitig im Gehäuse (7) des Einsatzes (2) zumindest ein Schacht (9) zur Aufnahme einer Sicherungsfeder (10) vorhanden ist, und dass die Sicherungsfeder (10) einerseits über zumindest ein erstes Haltemittel (11) im Schacht (9) festlegbar ist, und dass die Sicherungsfeder (10) anderseits zumindest ein über den Schacht (9) hinausragendes zweites Haltemittel (12) aufweist, das zur Demontageverhinderung verrastend an dem, an der Installationsdose (1) festgelegten Träger (6) zur Anlage kommt.

2. Elektrisches/elektronisches Installationsgerät nach Anspruch 1, **dadurch gekennzeichnet, dass** der Schacht (9) im Bereich des ersten Haltemittels (11) einen Festsitz (13) und zum Zwecke der Verrastungslösung zumindest im Bereich des zweiten Haltemittels (12) eine, eine Ausweichbewegung ermöglichende Freimachung (14) aufweist.

3. Elektrisches/elektronisches Installationsgerät nach Anspruch 1 oder 2, **dadurch gekennzeichnet, dass** die Sicherungsfeder (10) einen Betätigungssteg (15) aufweist, an den einerseits das zumindest eine erste Haltemittel (11) und an den andererseits das zumindest eine zweite Haltemittel (12) angeformt ist.

4. Elektrisches/elektronisches Installationsgerät nach einem der Ansprüche 1 bis 3, **dadurch gekennzeichnet, dass** die Sicherungsfeder (10) zumindest eine angeformte Lasche (16) aufweist.

5. Elektrisches/elektronisches Installationsgerät nach einem der Ansprüche 1 bis 4, **dadurch gekennzeichnet, dass** dieses als Kompaktgerät ausgeführt ist, und dass der Einsatz (2) und der Aufsatz (4) fest miteinander in Verbindung stehen.

6. Elektrisches/elektronisches Installationsgerät nach einem der Ansprüche 1 bis 4, **dadurch gekennzeichnet, dass** dieses zumindest aus zwei Funktionsmodulen besteht, und dass ein erstes Funktionsmodul als in einer Installationsdose (1) unterzubringender Einsatz (2), und dass das zweite Funktionsmodul als frontseitig mit dem Einsatz (2) koppelbarer, bedarfsweise austauschbarer Aufsatz (4) ausgeführt ist.

7. Elektrisches/elektronisches Installationsgerät nach einem der Ansprüche 1 bis 6, **dadurch gekennzeichnet, dass** im Gehäuse (7) des Einsatzes (2) zwei Schächte (9) vorhanden sind, und dass jeder der beiden Schächte (9) mit einer Sicherungsfeder (10) bestückt ist.

8. Elektrisches/elektronisches Installationsgerät nach einem der Ansprüche 1 bis 7, **dadurch gekennzeichnet, dass** zumindest ein erstes Haltemittel (11) und/oder zumindest ein zweites Haltemittel (12) als Rasthaken ausgeführt ist.

## Claims

1. Electric/electronic installation device with an insert to be housed in an installation box, wherein the insert provides connecting elements at the rear for connection to a building installation system and interacts retentively with a support fixed at the installation box via at least one catch spring installed at the back of the housing of the insert, and wherein the insert has a top piece at the front, **characterized by the fact** that at the rear of the housing (7) of the insert (2) there is at least one shaft (9) to take up a retaining spring (10), and that on the one hand the retaining spring (10) can be fastened in the shaft (9) by at least one first support (11), and that on the other hand the retaining spring (10) provides at least one second support (12) protruding over the shaft (9), which, to avoid demounting, snaps into the support (6) at the installation box (1).

2. Electric/electronic installation device in accordance with Claim 1, **characterized by the fact** that the shaft (9) in the area of the first support (11) provides a tight fit (13) and as catch mechanism at least in the area of the second support (12) provides a recess (14) allowing an evasive movement.

3. Electric/electronic installation device in accordance with Claim 1 or 2, **characterized by the fact** that the retaining spring (10) provides an operation bar (15), at which on the one hand the at least one first support (11) and on the other hand the at least one second support (12) is moulded-on.

4. Electric/electronic installation device in accordance with any of Claims 1 to 3, **characterized by the fact** that the retaining spring (10) provides at least one moulded-on flap (16).

5. Electric/electronic installation device in accordance with any of Claims 1 to 4, **characterized by the fact** that it is designed as compact device and that the insert (2) and the top-piece (4) are tightly joined together.

6. Electric/electronic installation device in accordance with any of Claims 1 to 4, **characterized by the fact** that it consists of at least two function modules and that one first function module is designed as insert (2) to be housed in an installation box (1) and that the second function module is designed as top-piece (4) to be coupled to the insert (2) at the front and to be exchanged on demand.

7. Electric/electronic installation device in accordance with any of Claims 1 to 6, **characterized by the fact** that in the housing (7) of the insert (2) two shafts (9) are provided, and that each of the two shafts (9) is equipped with a retaining spring (10).

8. Electric/electronic installation device in accordance with any of Claims 1 to 7, **characterized by the fact** that at least one first support (11) and/or at least one second support (12) is designed as catch.

## Revendications

1. Appareil d'installation électrique/électronique comportant un insert devant être placé dans une boîte d'installation, cet insert présentant au dos des éléments de connexion permettant le raccordement à un système d'installation d'un bâtiment, ainsi qu'au moins un système de raccord à déclic placé au dos du boîtier de l'insert, système agissant ensemble avec un support fixé à la boîte d'installation pour assurer le maintien, et l'insert étant muni sur l'avant d'un élément rapporté, **caractérisé en ce que** il existe au dos dans le boîtier (7) de l'insert (2) au moins un logement (9) accueillant un ressort de maintien (10), et **en ce que** le ressort de maintien (10) peut être fixé dans le logement (9) d'une part par au moins un premier élément de maintien (11), et **en ce que** le ressort de maintien (10) présente d'autre part au moins un deuxième élément de maintien (12) dépassant du logement (9), appuyé contre le support (6) fixé à la boîte d'installation (1) afin d'empêcher, par encliquetage de verrouillage, un démontage.

2. Appareil d'installation électrique/électronique selon la revendication 1, **caractérisé en ce que** le logement (9) présente dans le domaine du premier élément de maintien (11) un ajustement serré (13) et présente au moins dans le domaine du deuxième élément de maintien (12), pour le détachement de l'encliquetage de verrouillage, un dispositif de libération (14) permettant un mouvement de déport.

3. Appareil d'installation électrique/électronique selon l'une des revendications 1 ou 2, **caractérisé en ce que** le ressort de maintien (10) présente une baguette d'actionnement (15) sur laquelle est moulé d'une part le au moins premier élément de maintien (11) et d'autre part le au moins deuxième élément de maintien (12).

4. Appareil d'installation électrique/électronique selon l'une des revendications 1 à 3, **caractérisé en ce que** le ressort de maintien (10) présente au moins une bride (16) moulée dessus.

5. Appareil d'installation électrique/électronique selon l'une des revendications 1 à 4, **caractérisé en ce que** il est réalisé sous forme d'appareil compact, et **en ce que** l'insert (2) et l'élément rapporté (4) sont reliés l'un à l'autre de manière fixe.

6. Appareil d'installation électrique/électronique selon l'une des revendications 1 à 4, **caractérisé en ce que** il se compose d'au moins deux modules de fonction, et **en ce que** un premier module de fonction est réalisé sous forme d'insert (2) devant être logé dans une boîte d'installation (1), et ce que le deuxième module d'installation est réalisé sous forme d'élément rapporté (4) pouvant être accouplé à l'avant à l'insert (2), et pouvant être remplacé si nécessaire.

7. Appareil d'installation électrique/électronique selon l'une des revendications 1 à 6, **caractérisé en ce que** le boîtier (7) de l'insert (2) présente deux logements (9) et **en ce que** chacun des deux logements (9) est équipé d"un ressort de maintien (10).

8. Appareil d'installation électrique/électronique selon l'une des revendications 1 à 7, **caractérisé en ce que** au moins un premier élément de maintien (11) et/ou au moins un deuxième élément de maintien (12) est réalisé sous forme de crochet de maintien.
